**Europäisches Patentamt**

**European Patent Office**

**Office européen des brevets**

(19)

(11) Veröffentlichungsnummer: **0 214 418**
**B1**

(12) # EUROPÄISCHE PATENTSCHRIFT

(45) Veröffentlichungstag der Patentschrifft:
**21.03.90**

(51) Int. Cl. ⁵: **A 22 C 13/00**

(21) Anmeldenummer: **86109970.3**

(22) Anmeldetag: **21.07.86**

(54) **Rohwursthülle, Verfahren zu ihrer Herstellung und Verwendung für an der Luft reifende Wurstwaren.**

(30) Priorität: **24.07.85 DE 3526394**

(43) Veröffentlichungstag der Anmeldung:
**18.03.87 Patentblatt 87/12**

(45) Bekanntmachung des Hinweises auf die Patenterteilung:
**21.03.90 Patentblatt 90/12**

(84) Bennante Vertragsstaaten:
**AT BE CH DE FR GB IT LI NL SE**

(56) Entgegenhaltungen:
**DE-A-2 128 613**
**DE-A-2 324 065**
**DE-A-2 437 781**
**DE-C-679 748**

(73) Patentinhaber: **Naturin-Werk Becker & Co.**
**Badenlastrasse 13**
**D-6940 Weinheim/Bergstrasse (DE)**

(72) Erfinder: **Erk, Gayur, Dr.-Ing.**
**Lärchenweg 14**
**D-6941 Gorxhelmertal (DE)**
Erfinder: **Kühn, Joachim, Dr. Dipl.-Chem.**
**Tulpenweg 4**
**D-6940 Weinheim/Bergstrasse (DE)**

(74) Vertreter: **Klöpsch, Gerald, Dr.-Ing.**
**An Gross St. Martin 6**
**D-5000 Köln 1 (DE)**

LIBERGRAF, STOCKHOLM 1990

**Beschreibung**

Die Erfindung betrifft eine Rohwursthülle, die aus einem bindemittelfreien, in Längsrichtung verschweißten, verklebten oder vernähten isotropen Spinnvlies aus wenigstens einem Polyamid besteht, das partiell verdichtet ist. Die Erfindung betrifft ferner ein Verfahren zur Herstellung dieser Rohwursthülle und die bestimmungsgemäße Verwendung zur Verpackung von an der Luft reifenden Wurstwaren.

Rohwürste sind dem Verbraucher z. B. unter dem Namen Salami, Plockwurst oder Schlackwurst bekannt. Sie werden aus grob bis mittelfein gewolftem Rindfleisch, Schweinefleisch, Speck, Pökelsalz und Gewürzen ohne Zusatz von Wasser hergestellt. Nachdem die Wursthüllen mit der auf ca. -4°C gekühlten und daher sehr festen Brätmischung gefüllt sind, werden die Würste 1 bis 2 Tage bei ca. 18 bis 25°C und 98 % relativer Feuchte geschwitzt, wobei sich durch Umröten die charakteristische rote Fleischfarbe entwickelt. Danach werden die Würste ca. 3 Tage lang bei 18 - 20°C schwach geräuchert und schließlich bei maximal 18°C mehrere Wochen in Reiferäumen mit schwacher Luftbewegung gereift und verlieren dabei zwischen 25 und 45 % ihres Gewichtes an Wasser. Beim Füllen werden an die Festigkeit und Elastizität der Hüllen, vor allem, wenn auf Automaten gearbeitet wird, hohe Anforderungen gestellt, weil es auf eine beulenfreie, gleichmäßig feste Füllung mit zylindrischer Form ankommt.

Damit die Reifung ungehindert fortschreiten kann, müssen die Wursthüllen für Wasserdampf so gut durchlässig sein, daß das Wasser aus dem Innern der Wurst, wenn es an die Oberfläche der Fleischmasse gelangt, unverzögert durch die Hülle diffundieren und von der Oberfläche verdunsten kann. Selbstverständlich ist mit dem Wasserverlust der Rohwürste auch ein entsprechender Volumenschwund verbunden, der sich vor allem in einer Abnahme des Wurstumfanges zeigt dem die Hülle in gleichem Maße durch Schrumpfung folgen soll. Im Verlaufe der Reifung wird das in der Rohwurst enthaltene Fett mehr und mehr mobil und tritt, wenn die Hülle porös ist, aus der Wurst aus und wird schnell ranzig. Da dies unhygienisch und bei der Handhabung der Wurst lästig ist, soll die Wursthülle auch fettdicht sein. Abgesehen von Wursthüllen aus Kollagen, die sich wegen der Verwandtschaft des Materials zum Darm gut eignen, ist es bis heute ein Problem, bei Wursthüllen aus synthetischem Material für die Herstellung von Rohwurst die o. g. Eigenschaften optimal zu kombinieren. Von den vielen Versuchen zum Ersatz der Naturdärme für Rohwurst durch Hüllen aus synthetischem Material haben sich nur wenige mit nennenswerten Marktanteilen durchsetzen können. Zu diesen gehören neben der Kollagen-Wursthülle und den mit Kollagen und/oder Gelatine imprägnierten, gewebten oder gewirkten Textilfasergerüsten in erster Linie faserverstärkte Celluloseregenerat-Wursthüllen und daneben in geringerem Umfange genähte Wursthüllen aus Baumwollgewebe.

Es hat nicht an Versuchen gefehlt, Vliesstoffe als Basis für Rohwursthüllen zu verwenden, doch haben diese bisher wegen gravierender Mängel keine wirtschaftliche Bedeutung erlangt. Erste Versuche zur Herstellung von Wursthüllen aus Vliesstoffen waren auf die Verwendung als Brühwursthülle gerichtet. Demgemäß wurden in den Druckschriften DE-PS-1 917 265, DE-OS-1 962 331, DE-OS-2 105 715 und DE-OS-2 154 972 Vliesstoffe aus synthetischen Stapelfasern mit Zusatz von Kollagenfasern und mit einer wasserdampfdichten Beschichtung von PVDC vorgeschlagen.

In der DE-OS-2 128 613 wurde erstmals ein Spinnvlies als Rohwursthülle beansprucht. Als Ausgangsmaterial wurden z. B. Polyamide, Polyolefine und Polyester vorgeschlagen. Auch Mischungen dieser Fasern mit Hautfasern bzw. Celluloseprodukten sollten Verwendung finden. Ein Nachteil dieser Vliesstoffe war, daß die Wursthüllen beim Abpellen "ausfaserten", d. h. sich beim Abziehen von der Wurst so spalteten, daß die innere Schicht, die sich mit dem Wurstgut verbunden hatte, darauf zurückblieb, so daß ein mühseliges Nachfassen und Entfernen der Reste in kleinen Stücken erforderlich war. Zur Abhilfe wurde zunächst eine Lackierung oder Imprägnierung mit filmbildenden Polymeren vorgeschlagen.

In der DE-OS-2 437 781 wurde später, um das "Ausfasern" zu verhindern, eine thermomechanische Behandlung beansprucht. Diese bestand darin, daß das Spinnvlies heiß kalandriert wurde, wodurch unter Erhaltung der Einzelfasern diese an den Kreuzungspunkten verschweißt oder verschmolzen werden sollten. In der DE-OS-2 330 774 wird eine Wursthülle aus einem Stapelfaservlies aus Polyamidfasern und/oder Viscosefasern und/oder Acrylfasern beschrieben. Das Material soll für Brühwurst und Rohwurst geeignet sein.

In der DE-OS-3 029 028 wird ebenfalls eine Wursthülle zur Herstellung von Rohwurst beansprucht. Diese soll vorzugsweise aus einem thermisch verfestigten Spinnvlies aus PA- oder PP-Fasern bestehen, das eine Naßreißfestigkeit von mindestens 30 N und eine Naßdehnung von mindestens 95 % zeigt und vorzugsweise mit einer 1 : 1 Mischung aus Polyvinylalkohol und Gelatine getränkt wird, die nach dem Trocknen einen durchgehenden Film bildet.

Von den vorstehend genannten Wursthüllen ist jedoch keine jemals in den Handel gekommen. Es ist daher offensichtlich, daß diese Vlieshüllen für Rohwürste noch mit einem oder mehreren der folgenden Mängel behaftet waren:

1. eine zu geringe Festigkeit, die sich nicht so sehr in Platzern beim Füllen als vielmehr in einer mangelhaften Kalibertreue äußert. Das heißt, daß die Hüllen beim Füllen sich unter dem Fülldruck bleibend dehnen und deshalb im Verlauf ihrer Länge ungleichmäßiges Kaliber zeigen oder gar stellenweise ausbeulen,

2. eine zu geringe Wasserdampfdurchlässigkeit, die sich in einem verlängerten Trocknungsbedarf äußert, ist entweder die Folge der Anwendung von Vliesbindemitteln oder einer zu intensiven thermomechanischen Verfestigung, um das Ausfasern zu verhindern,

3. eine zu geringe Schrumpffähigkeit, die zu runzeligen Würsten und evtl. zu stellenweiser Ablösung der Wursthaut führt,

4. eine unzureichende Fettdichtheit, die das Fett im Verlaufe des Reifens austreten und ggf. abtropfen läßt,
5. das Ausfasern, d. h. das Spalten des Vlieses beim Abpellen, das auf einer zu geringen Bindung innerhalb des Vlieses beruht.

Aufgabe der Erfindung ist daher die Schaffung einer Rohwursthülle, die möglichst weitgehend die an eine Rohwursthülle zu stellenden Anforderungen bezüglich Festigkeit, Wasserdampfdurchlässigkeit, Schrumpffähigkeit, Fettdichtheit und Abpellbarkeit erfüllt.

Diese Aufgabe wird erfindungsgemäß durch eine Hülle aus einem bindemittelfreien, isotropen Spinnvlies aus wenigstens einem Polyamid gelöst, welches in Längsrichtung zu einem Schlauch zusammengefügt ist und welches partiell derart verdichtet ist, daß das Vlies ein bestimmtes Flächenverdichtungsverhältnis $V_F$ im Bereich von 0,12 bis 2,3 und ein Tiefenverdichtungsverhältnis $V_T$ von 0,24 bis 0,5 aufweist.

Das Polyamid für das Spinnvlies besteht bevorzugt aus einem oder mehreren Polyamiden aus der Gruppe PA6, PA6-6, PA6-10, PA11, PA12 und/oder Copolyamiden aus zwei oder mehreren der entsprechenden Monomeren.

Dabei ist es besonders vorteilhaft, daß die erfindungsgemäße Rohwursthülle auf ihrer Berührungsfläche mit dem Wurstbrät, d. h. ihrer Innenseite, eine strukturierte Oberfläche aufweist, während die andere (äußere) Oberfläche glatt und unstrukturiert ist. Die erfindungsgemäße Rohwursthülle weist aufgrund der erfindungsgemäßen speziellen teilweisen Verdichtung die folgenden Merkmale auf:

1. Das Kraft-Längenänderungsdiagramm der Hülle verläuft bis mindestens 90 % der Reißkraft "hookeelastisch".
2. Die Querreißdehnung der Hülle beträgt stets weniger als 90 %.
3. Die aus dem Kraft-Längenänderungsdiagramm der Hülle berechneten Steigungswerte $F_y/\Delta l_x$ betragen mindestens 1 N/mm.

Die Messungen dieser Eigenschaften erfolgen in Anlehnung an DIN 53 455.

Gemäß einer bevorzugten Ausführungsform weist die erfindungsgemäße Rohwursthülle auf ihrer inneren Oberfläche rechteckige, vorzugsweise quadratische, verdichtete Bereiche und dazwischen befindliche unverdichtete Stege auf, wobei die Kanten der Rechtecke parallel bzw. senkrecht zueinander und zur Wursthüllenlängsachse verlaufen. Die Seitenlängen der Rechtecke liegen dabei im Bereich von 0,5 bis 1,5 mm, die Breite der Stege im Bereich von 0,3 bis 1 mm. Die Wandstärke, gemessen an den unverdichteten Stegen, liegt bei 0,125 bis 0,25 mm und im Bereich der verdichteten Rechtecke bei 0,06 bis 0,125 mm. Das Flächenverdichtungsverhältnis $V_F$ gibt das Verhältnis der verdichteten Vliesoberfläche - dies ist die Flächensumme aller Rechtecke (7) $\Sigma F_{Rechtecke}$ zur unverdichteten Vliesoberfläche - dies ist die Flächensumme aller Stege (8) $\Delta F_{Stege}$ - an.

$$V_F = \frac{\Sigma F_{Rechtecke}}{\Sigma F_{Stege}} \qquad\qquad Gl.1$$

Demnach wird $V_F$ allein durch die Wahl der Rechteckkantenlänge und der Stegbreite bestimmt.

Das Tiefenverdichtungsverhältnis $V_T$ ist entsprechend das Verhältnis der Gravurtiefe $T_G$ zur Ausgangswandstärke $W_{Ausg}$

$$V_T = \frac{T_G}{W_{Ausg}} \qquad\qquad Gl.2$$

$V_T$ ist bei konstanter Vlies-Ausgangswandstärke allein durch die Gravurtiefe festgelegt.

Für die kleinste Stegbreite und größte Rechteckkantenlänge errechnet sich nach Gl.1 ein maximales Flächenverdichtungsverhältnis von

$$V_{FMax.} = \frac{(1,5)^2}{(0,3)^2 + 2 \times 0,3 \times 1,5} = 2,27$$

und entsprechend mit der größten Stegbreite sowie der kleinsten Rechteckkantenlänge ein minimales Flächenverdichtungsverhältnis von

$$V_{FMin.} = \frac{(0,5)^2}{(0,5)^2 + 2 \times 1 \times 0,5} = 0,125$$

Das maximale Tiefenverdichtungsverhältnis bei einer konstanten Vlieswandstärke von 0,250 mm ergibt sich nach Gl.2 bei der Gravurtiefe

$$V_{TMax.} = \frac{0,125}{0,250} = 0,5$$

und das minimale Tiefenverdichtungsverhältnis

$$V_{TMin.} = \frac{0,06}{0,250} = 0,24$$

für die kleinste Gravurtiefe.

Bei $V_F$ größer als 2,27 und $V_T$ größer als 0,5 überwiegt der Foliencharakter des partiell verdichten Spinnwirrvlieses. Dies hat folgende Nachteile zur Folge:

Das Kraftlängenänderungsdiagramm weicht immer mehr von der Hookeelastizitätsbedingung ab. Die Kurve zeigt einen S-förmigen Verlauf.

Das Vlies versprödet zunehmend, büßt zu sehr an Festigkeit ein.

Es läßt sich kein vernünftiger Steigungswert

$$\frac{F_y}{\Delta l_x}$$

mehr errechnen (Figur 6)

Bei $V_F$ kleiner als 0,125 und $V_T$ kleiner als 0,25 dominiert dagegen der Vliescharakter, der ebenfalls Nachteile mit sich bringt:

Das Kraftlängenänderungsdiagramm ist durch einen irreversiblen Fließzustand gekennzeichnet.

Die geforderte Kurzdehnfähigkeit ist nicht mehr erfüllt.

Selbst der auf 20 % der Reißkraft verminderte rein Hooke'sche Bereich des Kraftlängenänderungsdiagrammes führt zu Steigungswerten deutlich unter 1,0 N/mm (Figur 7).

Im Wesentlichen wird dieses Fehlverhalten durch die mangelhafte thermische Verschmelzung der Faserkreuzungspunkte im Vlies verursacht.

Rohwursthüllen aus Polyamid-6-Spinnwirrvliesen mit den vorstehend erwähnten Merkmalen sind bisher nicht bekannt und nicht nahegelegt.

Die erfindungsgemäße Rohwursthülle weist die folgenden wertvollen Eigenschaften auf:

Sie ist im gesamten Hüllenverarbeitungsbereich hookeelastisch. Dies ist deswegen wichtig, weil hierdurch ein kalibertreues, elastisches Ausdehnen der Hülle während des Brätfüllvorganges sichergestellt wird. Die ebenfalls gegebene Kurzdehnfähigkeit steht hiermit im Zusammenhang und verhindert eine partielle, bleibende Deformation der Hülle unter der Füllbelastung. Die Steigungswerte aus dem Kraft-Längenänderungsdiagramm geben an, daß die Hülle während des Füllens zumindest soweit elastisch ausgeweitet wird, daß sie auch bei lange reifenden Qualitätsrohwürsten der Brätkontraktion, welche bis zu 45 Vol-% betragen kann, mit Sicherheit faltenfrei folgen kann.

Schließlich können in der erfindungsgemäßen Rohwursthülle Eigenschaften, die eigentlich konträr zueinander sind, auf optimale Weise vereinigt werden. Solche Eigenschaften wie:

a) schnelle Reifung, jedoch ohne Austreten von Fett
b) rustikales Aussehen bei homogener Struktur
c) starke Bräthaftung und leichtes Abpellen

sind mit einem reinen Vlies ebensowenig zu erreichen wie mit einer reinen Folie. Schnelle Reifung bedeutet eine hohe Trocknungsgeschwindigkeit, also bevorzugte Vliesstruktur, welche auch optimale Räucherergebnisse liefert. Allerdings ist bei einem reinen Vlies der Fettdurchtritt unerwünscht hoch. Die erfindungsgemäße Hülle liefert hier einen ausgewogenen Kompromiß. Ähnliches gilt für die Haftung der Hülle an der Fleischoberfläche. Alle flächigen Polyamide weisen wegen der proteinähnlichen Struktur der Carbonamidgruppe -CO-NH- im Polyamid-Makromolekül eine besondere Adhäsion zum Rohwurstbrät auf. Diese Eigenschaft ist zwar einerseits sehr willkommen, wenn es darum geht, das Ablösen der Hülle vom Brät zu verhindern oder das Mitgehen der Hülle während der Reifung zu sichern (Verhinderung der Bildung von Fett-Taschen an der Kontaktfläche Hülle/Brät), andererseits ist die starke Haftung äußerst lästig, wenn die Hülle vor dem Verzehr entfernt werden soll, und zwar genau dort, wo es erwünscht ist, nämlich an der Grenzfläche Hülle/Brät. Auch hier wird mit der erfindungsgemäßen Rohwursthülle ein Optimum erreicht, wobei die Hülle sich während des Abpellens nicht in einzelne Fusseln aufspaltet,sondern sich leicht und vollständig abpellen läßt.

Eine weitere erwünschte und neue, positive Eigenschaft der erfindungsgemäßen Rohwursthülle ist ihre ausgezeichnete Nähbarkeit. Sie läßt sich wie ein Gewebe zu Sonderformen nähen und erreicht dabei Nahtfestigkeiten, die weder von unverdichteten noch ganzflächig verdichteten Vliesen erzielt werden können.

Die erfindungsgemäße Rohwursthülle wird nach einem ebenfalls zur Erfindung gehörenden Verfahren hergestellt, indem ein auf bekannte Weise erzeugtes bindemittelfreies Spinnwirrvlies aus Polyamid 6 einer thermomechanischen partiellen Verdichtungsbehandlung unterworfen wird, worauf das so partiell verdichtete und strukturierte Vlies in Längsrichtung zum Schlauch zusammengefügt wird, wobei gemäß einer bevorzugten Ausführungsform nur eine Oberfläche strukturiert wird, die dann beim Zusammenfügen zum Schlauch die Innenseite bildet. Als Ausgangsmaterial wird ein weitgehend isotropes Polyamid-6-Spinnvlies mit Flächengewichten von 30 bis 80 g/ m² und Wandstärken von 0,125 bis 0,250 eingesetzt. Die partielle Verdichtungsbehandlung wird unter Anwendung von Druck und erhöhter Temperatur vorzugsweise mittels eines Walzenpaares vorgenommen, das einen Spalt bildet, durch den das Vlies geführt wird. Die Oberwalze weist bevorzugt eine durch Längs- und Querrillen in jeweils gleichen Abständen strukturierte, verschleißfeste Oberfläche aus Hartmetall auf und ist bis etwa 600 K beheizbar. Die Oberwalze kann mit einem Druck bis zu 200 bar auf die Unterwalze gedrückt werden, die gemäß bevorzugter Ausführungsform eine glatte Oberfläche aufweist und einen nicht klebenden Belag hat. Die untere Walze, die eine Gummiwalze sein kann, kann ggf. gekühlt werden. Druck und Temperatur der Oberwalze werden so eingestellt, daß das Vlies von den hervorstehenden Quadern der Oberwalze verdichtet wird, im Bereich der Rillen jedoch nicht verdichtet wird, so daß unverdichtete Stege zwischen verdichteten Rechtecken erhalten bleiben. Die erhabenen Quader der Oberwalze sind vorzugsweise quadratisch und haben eine Kantenlänge von 0,5 bis 1,5 mm. Die Rillen zwischen den Quadern haben rechteckigen Querschnitt. Ihre Breite beträgt 0,3 bis 1 mm, ihre Tiefe 0,06 bis 0,125 mm. Längs- und Querrillen besitzen bei einer Walze vorzugsweise gleiche Konturen, ihre Abmessungen können aber auch unterschiedlich sein. Die Zuführgeschwindigkeit des Vlieses in das beschriebene Walzenpaar beträgt 5 bis 20 m/min. Das Spinnwirrvlies wird so im Walzenspalt in exakt definierter Weise partiell verdichtet. Dabei wird die Kontur der Oberwalze auf die Oberfläche des Spinnvlieses übertragen, während dessen Unterseite glatt erhalten bleibt. Die erhabenen Quader auf der Oberwalze verdichten das Vlies, während die Rillen das Vlies unverdichtet passieren lassen. Man erkennt unmittelbar die partiell verdichteten Bereiche mit einer um die Höhe der Quader verminderten Wandstärke und die den Walzenspalt unverdichtet passierenden Bereiche. Die letzteren haben ihre typisch faserige Struktur beibehalten, während die ersteren nunmehr folienartig strukturlos, beinahe transparent erscheinen. Diese unterschiedliche Struktur ist das Hauptmerkmal der Anmeldung. Sie ist Grundvoraussetzung für die Erfüllung der zuvor angegebenen spezifischen Merkmale 1,2 und 3. Sie ist durch ein besonderes Flächen- und Tiefenverdichtungsverhältnis definiert.

Die Fertigung der Rohwursthülle aus dem partiell verdichteten Vlies erfolgt auf bekannte Art und Weise durch längsaxiales Kleben, Nähen oder Schweißen. Bekannte geeignete Klebformulierungen sind in dem Kunststoff-Handbuch Bd. IV "Polyamide" Vieweg-Müller, Carl Hanser Verlag, auf Seiten 412 bis 420 angegeben.

Nähen und Schweißen sind als trockene Fügeverfahren bevorzugt.

Die besonders bevorzugte Fertigungstechnik ist jedoch das Schweißen. Heizelementschweißen, Hochfrequenzschweißen und Ultraschallschweißen sind als bekannte Verfahren gleich gut geeignet. Sie sind im oben genannten Kunststoff-Handbuch Bd. VI auf den Seiten 408 bis 414 beschrieben.

Die Fertigung erfolgt aus dem kalibergemäß auf Flachmaß geschnittenen, erfindungsgemäß vorbehandelten Spinnwirrvlies. Dieses wird von der Vorratsrolle abgerollt, über eine entsprechende Formschulter längsaxial leicht überlappend zur Schlauchhülle geformt und durch Schweißen (Nähen, Kleben) in dieser Form fixiert. Danach durchläuft der Schlauch ggf. einen Trocknungstunnel, wenn zuvor geklebt wurde. Bevorzugt wird er jedoch nach dem Schweißen (Nähen) sofort flachgelegt und aufgewickelt.

Die Hülle kann nach allen bekannten Methoden konfektioniert werden. Hierzu gehören Einfärben, Bedrucken, Raffen, Abbinden, Nähen zu Sonderformen, usw.

Die Erfindung wird durch die folgenden Figuren weiter erläutert:

| Figur 1 | zeigt das Kraftlängenänderungsdiagramm einer erfindungsgemäßen Rohwursthülle, die entsprechend Beispiel 1 erhalten wurde. |
| --- | --- |
| Figur 2 | zeigt die partielle Verformung eines thermoplastischen Spinnvlieses: das isotrope PA-6-Spinnvlies (1) wird durch den Spalt eines Walzenpaares zugeführt, dessen Oberwalze (2) strukturiert ist und dessen Unterwalze (3) eine glatte Oberfläche aufweist. |
| Figur 3 | zeigt einen Ausschnitt der Oberfläche der verformenden Walze (2): die Hartmetalloberfläche (4) der Walze (2) ist durch Längs- und Querrillen in jeweils gleichen Abständen quaderförmig strukturiert. Die erhabenen Quader (5) der Oberwalze (2) sind bevorzugt quadratisch. Die Rillen (6) zwischen den Quadern sind bevorzugt rechteckig. |
| Figur 4 | zeigt das gemäß Beispiel 1 hergestellte Spinnvlies in der Aufsicht: partiell verdichtete Bereiche (7) mit einer um die Höhe der Quader verminderten Wandstärke wechseln mit unverdichteten Bereichen (8) ab. |
| Figur 5 | zeigt das Vlies von Figur 4 im Schnitt längs A - B. |
| Figur 6 | zeigt das Kraftlängenänderungsdiagramm eines Spinnvlieses gemäß Vergleichsbeispiel 5. |
| Figur 7 | zeigt das Kraftlängenänderungsdiagramm eines Spinnvlieses gemäß Vergleichsbeispiel 3. |

Die Erfindung wird durch die folgenden Beispiele erläutert:

## Beispiel 1

Reines Polyamid 6 mit einer relativen Viskosität von 3,2, gemessen in 96-%-iger Schwefelsäure nach DIN 53 727 bei 298 K, dessen in kochendem Wasser in 18 Stunden extrahierte Monomer- und Oligomerbestandteile weniger als 0,35 % betragen, wurde nach bekannten Verfahren zu einem isotropen Spinnwirrvlies mit einem Flächengewicht von 60 g/m² und einer Ausgangswandstärke von 0,210 mm umgeformt. Dieses Spinnwirrvlies wurde dann mit 10 m/min dem Spalt eines Walzenpaares zugeführt, dessen Oberwalze eine Rechteckgravur mit einer Kantenlänge von 0,8 mm, einer Gravurtiefe von 0,080 und eine Stegbreite von 0,4 mm aufwies. Die Hartmetalloberfläche dieser Strukturwalze war auf 500 K aufgeheizt. Sie wurde mit 130 bar auf die glatte antiadhäsiv gummierte Unterwalze gedrückt. Beim Durchlaufen dieses Walzenpaares wurde das PA6-Spinnvlies thermomechanisch partiell verdichtet und erhielt eine strukturierte Oberseite und eine glatte Unterseite. Die Wandstärke der verdichteten Bereiche betrug 0,130 mm, während die unverdichteten Bereiche ihre Ausgangswandstärke von 0,210 mm beibehielten.

Für das Flächenverdichtungsverhältnis $V_F$ wurde der Wert von

$$\frac{(0,8)^2}{(0,4)^2 + 2 \times 0,4 \times 0,8} = 0,8 \text{ errechnet.}$$

Das Tiefenverdichtungsverhältnis $V_T$ betrug:

$$\frac{0,080}{0,210} = 0,38$$

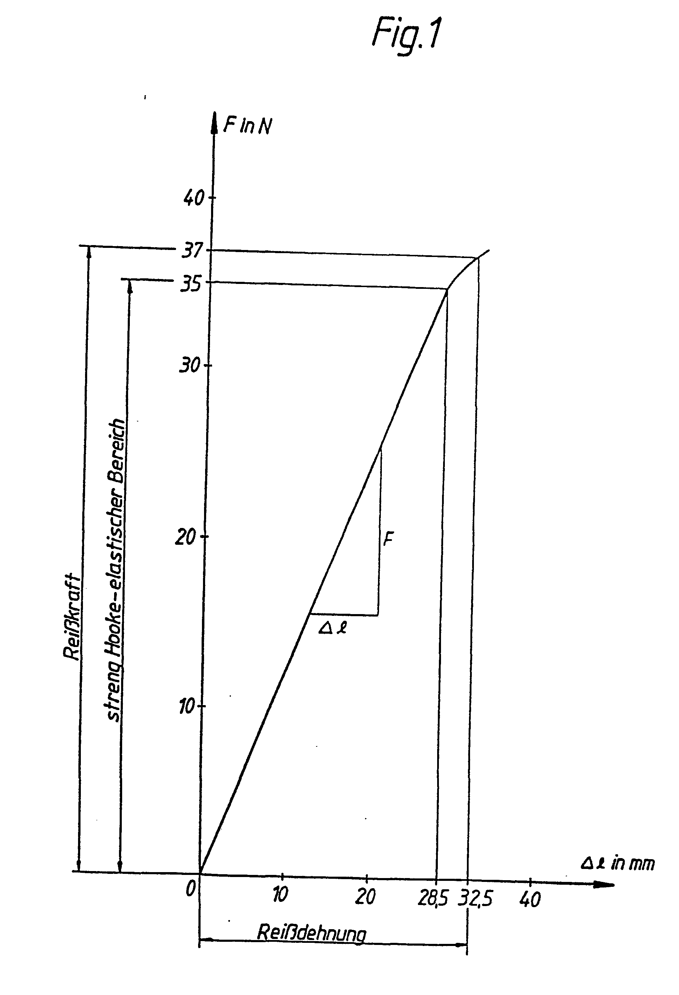

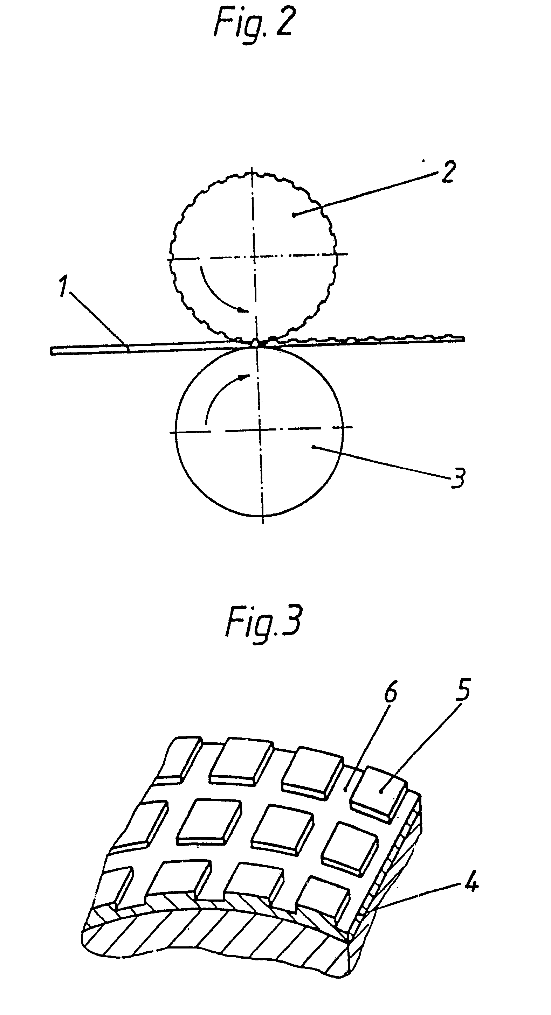

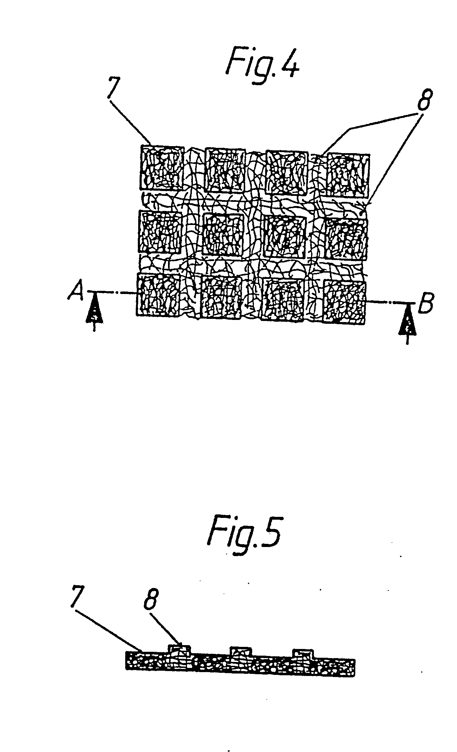

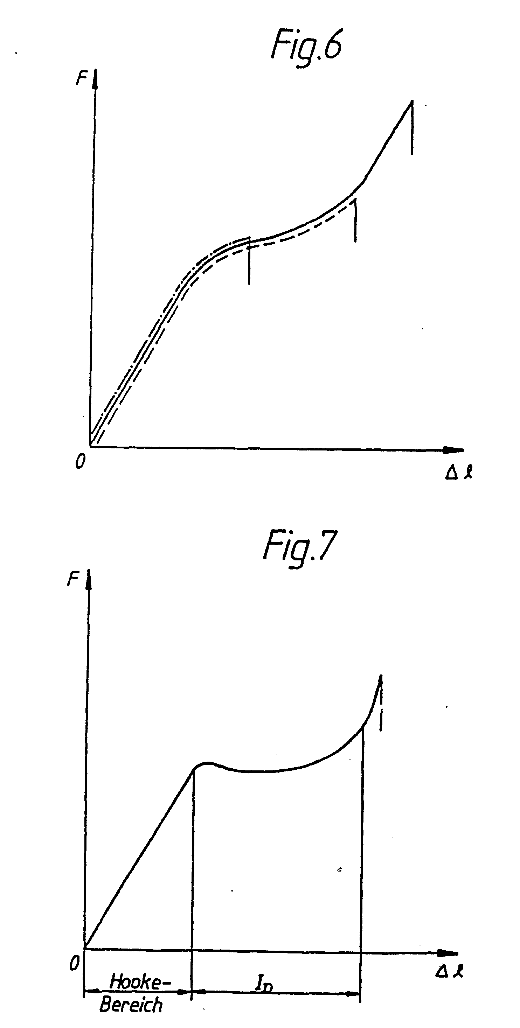

Das Kraftlängenänderungsdiagramm des erfindungsgemäß behandelten Vlieses wurde in Anlehnung an DIN 53 455 von in Querrichtung entnommenen Vliesstreifen von 15 ± 0,1 mm Breite und 50 mm Meßlänge aufgenommen. Es ist in der Figur 1 abgebildet.

Der streng hookeelastische Bereich reicht von 0 bis 35 N und entspricht somit 94,6 % der Reißkraft von 37 N.

Die Reißdehnung beträgt 32,5 mm, d. h. bezogen auf 50 mm Einspannlänge 65 %. Der Steigungswert

$$\frac{F_y}{\Delta l_x}$$

im Hooke'schen Bereich erreicht 1,23 N/mm.

Die auf diese Art und Weise gewonnene Vliesbahn wurde dann auf 193,5 mm Breitenmaß längsgeschnitten und über eine Formschulter zu einem Schlauch von 60 mm Durchmesser geformt. Die sich auf einer Breite von 5 mm überlappenden Vliesenden wurden dann zwischen einer strukturierten Sonotrode und einem glatten Amboß kontinuierlich längsaxial ultraschallgeschweißt, flachgelegt und aufgewickelt. Die strukturierte Vliesoberfläche bildete die Hülleninnenfläche. Der Raffung zu 20-m-Raupen auf einem kommerziellen Raffautomaten des Typs KÜKO 6 der Firma Kollross in D-6080 Groß-Gerau/BRD folgte die automatische Verarbeitung auf einem Füll-Clip-Automaten des Typs FCA der Firma Niedecker in D-6000 Frankfurt/Main/BRD mit Qualitätssalamibrät. Der Anmeldungsgegenstand überstand sowohl die Raffbelastung als auch das automatische Portionieren mit Clip ohne Beschädigungen und Ausfälle. Das Füllkaliber betrug 66 ± 1 mm über die ganze Länge der 50 cm langen Rohwurst. Am 28. Tag der auf übliche Art durchgeführten Reifung war die Reifung mit 38,8 % Gewichtsverlust schon sehr weit fortgeschritten. Es konnte an keiner der 200 Rohwürste Fettdurchschlag beobachtet werden. Die Hüllen konnten mühelos, ohne Vlies- bzw. Brätreste von Rohwurstscheiben abgepellt werden. Die Trennung Hülle/Brät erfolgte stets an der Sollgrenzfläche. Die Struktur der Hülleninnenfläche war auf der abgepellten Wurstoberfläche abgebildet. Dieses Bild bewies, daß der Kontakt zwischen Hüllenstegen und Wurstgut während der ganzen Reifezeit niemals unterbrochen war. An keiner der 200 Würste konnte ein Abheben der Vlieshülle vom Brät festgestellt werden. Dieses Bild verdeutlicht, daß die verdichteten Vliesbereiche mit dem Brät keinen festen Kontakt hatten, was zu den genannten ausgezeichneten Abpellresultaten führte. Das rustikale Aussehen der Heterostruktur der Hülle und ihre durch die hervorragende Räucherbarkeit angenommene Rauchfarbe dokumentieren die Ausgewogenheit der weiteren Eigenschaften.

## Beispiel 2

Beispiel 2 unterschiedet sich vom Beispiel 1 nur in der Fügetechnik. Die Hüllenfertigung erfolgte duch längsaxiales Nähen. Bei sonst gleichen Ergebnissen wie im Beispiel 1 wurde bei diesem Beispiel zusätzlich der Platzdruck der Hülle während des Brätfüllvorganges mit Hilfe des induktiven Druckaufnehmers P11 der Firma HBM in D-6100 Darmstadt/BRD gemessen. Der Platzdruck betrug 0,42 bar Überdruck (Mittelwert von 10 Messungen). Dabei platzten alle Hüllenmuster an der Naht.

**Beispiel 3** (Vergleichsbeispiel)

Das gleiche PA 6-Ausgangsspinnwirrvlies des Beispiels 1 wurde ohne thermomechanische partielle Verdichtung zu einer Vlieshülle von 60 mm Durchmesser ultraschallgeschweißt.

Für diese Hüllen können keine $V_F$- bzw. $V_T$-Werte angegeben werden, da ohne Verdichtung die Ausgangsvliesstruktur voll beibehalten wurde. Das Kraft-Längenänderungsdiagramm dieses Vlieses zeigt den in Figur 7 dargestellten Verlauf.

Man erkennt auf dem Diagramm den irreversiblen Deformationsbereich $I_D$, die dadurch bedingte hohe Dehnung - weit über 90 % - und das Fehlen der Hookeelastizität bis 90 % der Reißkraft. Deswegen ist es auch sinnlos, Steigungswerte

$$\frac{F_y}{\Delta l_x}$$

auszurechnen.

Die Hülle konnte ohne Ausfälle gerafft und gefüllt werden. Es traten jedoch beim Füllen nahezu bei allen Würsten örtliche Deformationen auf, die das Einhalten eines regelmäßigen Füllkalibers nicht zuließen. Die Reifung erfolgte noch schneller als bei den Hüllen der Beispiele 1 und 2 mit 43 % Gewichtsverlust in 28 Tagen. Bei 30 % der 200 Versuchswürste wurde bereits nach 3-wöchiger Reifung Fettdurchschlagen beobachtet. Es war unmöglich, die Hülle ohne Spaltung und ohne konkrete Vliesbruchstücke von Wurstscheiben abzupellen. Trotz hervorragender Rauchfarbe und Rauchannahme erschienen die Hüllen dieses Beispiels nicht so rustikal, wie die Hüllen der Beispiele 1 und 2, weil sie einphasig homogen erschienen.

**Beispiel 4** (Vergleichsbeispiel)

Es wurde so verfahren, wie im Beispiel 3 beschrieben, jedoch mit dem Unterschied, daß die Hüllenfertigung durch längsaxiales Nähen erfolgte. Die analog dem Beispiel 2 durchgeführten Platzdruckmessungen führten zum Mittelwert von 0,23 bar Überdruck. Bei 3 Messungen wurde beobachtet, daß die Hüllen außerhalb des Stoßnahtbereiches platzten. Damit ist gezeigt, daß die Nahtfestigkeit der Hüllen dieses Beispiels nicht mit der hohen Nahtfestigkeit der Hüllen des Beispiels 2 verglichen werden können.

**Beispiel 5** (Vergleichsbeispiel)

Dieses Vergleichsbeispiel unterscheidet sich von dem Beispiel 1 nur in der Ausführung der thermomechanischen Verdichtung. Das Ausgangsvlies des Beispiels 1 wird unter sonst gleichen Bedingungen, jedoch mit einer glatten Hartmetallwalze *ganzflächig* verdichtet. Hierdurch erhält das Ausgangsvlies eine Endwandstärke von 0,120 mm. Die Vliesstruktur ist vollständig in eine nahezu transparente Folie umgewandelt. $V_F$- und $V_T$-Werte können aufgrund der ganzflächigen Verdichtung nicht mehr angegeben werden.

Das Kraft-Längenänderungsdiagramm dieses Vlieses zeigt den in Figur 6 dargestellten Kurvenverlauf. Man erkennt eine S-Gestalt mit irreversibler Deformation im mittleren $\Delta l$-Bereich. Aufgrund der eingetretenen Sprödigkeit läßt sich der Kurvenverlauf bei verschiedenen Quermeßstreifen nicht mehr reproduzieren (vergl. durchgezogene, bzw. strichpunktierte/gestrichelte Kurve). Die Hookeelastizitätsbedingung ist nicht erfüllt, daher können auch keine Steigungswerte

$$\frac{F_y}{\Delta l_x}$$

angegeben werden.

Die Reißkraft ist aufgrund der Sprödigkeit des Vlieses so unterschiedlich, daß sich daraus kurzdehnige und langdehnige Muster ergeben.

Beim Ultraschallschweißen des Vlieses zur Hülle entsteht Abfall wegen häufigen Bruches. Beim Raffen bilden sich Löcher. Beim Füllen gibt es unzumutbar hohe Clipausfälle. Nach 28 Tagen Reifung tritt ein Gewichtsverlust von nur 18 % ein. Die Fettdichtigkeit ist bis auf Rafflöcher sicher gewährleistet. Ein zerstörungsfreies Abpellen der Hülle vom Brät ist nicht möglich. Es muß mehrfach nachgefaßt werden, um die Hülle restlos von der Rohwurstscheibe zu entfernen. Die Rauchannahme ist gerade noch akzeptabel, von einem rustikalen, gewebeartigen Aussehen kann keine Rede mehr sein. Die Hüllen dieses Beispiels sind unbrauchbar.

**Beispiel 6** (Vergleichsbeispiel)

Hier wurde das Beispiel 5 wiederholt, jedoch wurden die Hüllen aus dem Vlies analog den Beispielen 2 und 4 genäht.

Die erreichten Platzdrucke lagen im Mittel bei 0,18 bar Überdruck. Die Platzstelle war bei allen 10 Musterhüllen die Naht. Somit ist die Nahtfestigkeit dieser Hüllen deutlich niedriger als die des Beispiels 2.

**Patentansprüche**

1. Rohwursthülle bestehend aus einem in Längsrichtung zu einem Schlauch zusammengefügten, bindemittelfreien Spinnwirrvlies aus wenigstens einem Polyamid, *dadurch gekennzeichnet,* daß das Vlies partiell derart verdichtet ist, daß das Flächenverdichtungsverhältnis $V_F$ im Bereich von 0,12 bis 2,3 und das Tiefenverdichtungsverhältnis $V_T$ im Bereich von 0,24 bis 0,5 liegt.

2. Rohwursthülle nach Anspruch 1, *dadurch gekennzeichnet,* daß das Spinnvlies aus einem oder mehreren Polyamiden aus der Gruppe PA6, PA6-6, PA6-10, PA11, PA12 und/oder Copolyamiden aus zwei oder mehreren der entsprechenden Monomeren besteht.

3. Rohwursthülle nach Anspruch 1 - 2, *dadurch gekennzeichnet,* daß das Vlies auf seiner dem Wurstbrät zugekehrten Seite eine strukturierte Oberfläche und eine glatte äußere Oberfläche aufweist.

4. Rohwursthülle nach einem der vorangegangenen Ansprüche 1 - 3, *dadurch gekennzeichnet,* daß ihr Kraft-Längenänderungsdiagramm nach DIN 53 455 in Querrichtung

a) bis mindestens 90 % der Reißkraft hookeelastisch verläuft,
b) die aus dem hooke'schen Bereich berechneten Steigungswerte

$$\frac{F_y}{\Delta l_x} > 1 \text{ N/mm sind und}$$

c) die Dehnung weniger als 90 % beträgt, wobei alle Werte an $15 \pm 0,1$ mm breiten und 50 mm langen Streifen gemessen werden und $F_y$ die Zugkraft in N und $\Delta l_x$ die Änderung der Meßlänge in mm, die durch die Kraft $F_y$ bewirkt wird, bedeuten.

5. Rohwursthülle nach einem der Ansprüche 1 bis 4, *dadurch gekennzeichnet,* daß sie eine durch rechteckige verdichtete Bereiche und dazwischen befindliche unverdichtete Stege strukturierte innere Oberfläche aufweist, wobei die Kanten der Rechtecke parallel bzw. senkrecht zueinander und zur Wursthüllenlängsachse verlaufen.

6. Rohwursthülle nach Anspruch 5, *dadurch gekennzeichnet,* daß die Seitenlängen der Rechtecke 0,5 bis 1,5 mm; die Breite der Stege 0,3 bis 1 mm und die Wandstärke, an den unverdichteten Stegen gemessen 0,125 bis 0,25 mm und im Bereich der verdichteten Rechtecke 0,06 bis 0,125 mm beträgt.

7. Verfahren zur Herstellung einer Rohwursthülle nach einem der Ansprüche 1 bis 6, bei dem das auf bekannte Weise hergestellte, bindemittelfreie Spinnwirrvlies, das aus wenigstens einem Polyamid besteht, unter Anwendung von Druck und erhöhter Temperatur verdichtet wird, *dadurch gekennzeichnet,* daß die Verdichtung partiell und bleibend ist und daß die so partiell verdichtete und strukturierte Vliesbahn in Längsrichtung zum Schlauch verbunden wird.

8. Verfahren nach Anspruch 7, *dadurch gekennzeichnet,* daß das Spinnwirrvlies derart partiell verdichtet wird, daß eine Oberfläche glatt und unstrukturiert und die andere strukturiert ist und bei der Bildung des Schlauchs die strukturierte Oberfläche innen zu liegen kommt.

9. Verfahren nach einem der Ansprüche 7 bis 8, *dadurch gekennzeichnet,* daß man ein isotropes Spinnwirrvlies aus Polyamid 6 mit Flächengewichten von 30 bis 80 g/m$^2$ und Wandstärken von 0,125 bis 0,250 mm einsetzt.

10. Verfahren nach einem der Ansprüche 7 bis 9, *dadurch gekennzeichnet,* daß man die thermomechanische, partielle Verdichtungsbehandlung bei Drucken bis zu 200 bar und Temperaturen bis zu 600 K durchführt.

11. Verfahren nach Ansprüchen 7 bis 10, *dadurch gekennzeichnet,* daß die partielle Verdichtung mittels eines Walzenpaares erfolgt, dessen eine Walze eine beheizbare, vorzugsweise durch Längs- und Querrillen strukturierte, verschleißfeste Oberfläche aufweist, und dessen andere Walze, die ggf. kühlbar ist, eine glatte nichtklebende Oberfläche hat.

12. Verwendung der Rohwursthülle nach Ansprüchen 1 bis 6 zur Verpackung von an der Luft reifendem Wurstgut, wie Salami, Plockwurst oder Schlackwurst.

**Claims**

1. A raw sausage casing consisting of a spunbonded random nonwoven of at least one polyamide, which is free of a binder and joined in the longitudinal direction so as to form a tube, characterized in that the nonwoven is partially compressed such that the area compression ratio $V_F$ lies in the range of 0.12 to 2.3 and the depth compression ratio $V_T$ lies in the range of 0.24 to 0.5.

2. A raw sausage casing according to claim 1, characterized in that the spunbonded random nonwoven consists of one or a plurality of polyamides selected from the group consisting of PA6, pA6-6, pA6-10, pA11, pA12, and/or copolyamides of two or more corresponding monomers.

3. A raw sausage casing according to claim 1 or 2, characterized in that the nonwoven at the side facing the meat has an embossed surface and a smooth outer surface.

4. A raw sausage casing according to any one of the preceding claims 1 to 3, characterized in that its stress-strain diagram according to DIN 53 455 in the transverse direction:

a) extends elastically according to Hooke's Law up to at least 90 % of its tensile strength;
b) the gradient values calculated from the area compliant with Hooke's Law are

$$\frac{F_y}{\Delta l_x} > 1 \ N/mm, \ and$$

c) the elongation is less than 90 %; all values being measured on strips 15 ± 0.1 mm wide and 50 mm long, and wherein $F_y$ indicates the tensile force in N and $\Delta l_x$ stands for the change in the measured length in millimetres caused by a force $F_y$.

5. A raw sausage casing according to any one of claims 1 to 4, characterized in that it exhibits an embossed inner surface having rectangular compressed areas with uncompressed webs between said rectangular areas; the edges of the rectangles being parallel or perpendicular to one another and extending parallel to or perpendicular to the longitudinal axis of the sausage casing.

6. A raw sausage casing according to claim 5, characterized in that the side lengths of the rectangles are from 0.5 to 1.5 mm, the width of the webs is from 0.3 to 1 mm, and the wall thickness measured on the uncompressed webs is from 0.125 to 0.25 mm and in the area of the compressed rectangles is from 0.06 to 0.125 mm.

7. A process for the production of a raw sausage casing, as defined in any of claims 1 to 6, in which the binder-free spunbonded random nonwoven which is manufactured by a process known per se and which consists of at least one polyamide is compressed by means of pressure and elevated temperature, characterized in that the compression is of partial and permanent nature, and that the nonwoven web so partially compressed and embossed is joined in its longitudinal direction to form a tube.

8. A process according to claim 7, characterized in that the spunbonded random nonwoven is so partially compressed that one surface is smooth and unembossed and the other is embossed, the tube being formed with the embossed surface on the inside.

9. A process according to claim 7 or 8, characterized in that an isotropic spunbonded random nonwoven of polyamide-6 having area weights of 30 - 80 $g/m^2$ and wall thicknesses of 0.125 to 0.250 mm is used.

10. A process according to one of claims 7 to 9, characterized in that the thermo-mechanical partial compression process is carried out at pressures of up to 200 bar and at temperatures of up to 600 K.

11. A process according to claims 7 to 10, characterized in that the partial compression is effected by means of a pair of rollers, of which one roller has a surface that is wear-resistant, may optimally be heated, and is formed with longitudinal and transverse grooves, and of which the other roller may optionally be cooled and is smooth and has a non-sticking surface.

12. The use of the raw sausage casing according to claims 1 to 6 for packaging sausages that are cured in air, such as salami, servalatan sausage, or saveloy sausage.

**Revendications**

1. Enveloppe pour saucisse ou saucisson à chair fraîche ou crue qui se compose d'une nappe de filage sans orientation, exempte de liant, assemblée en direction longitudinale en une gaine ou boyau, se composant au moins d'un polyamide, caractérisée en ce que la nappe est partiellement densifiée en manière telle que le rapport de densification surfacique $V_F$ varie de 0,12 à 2,3 et que le rapport de densification en profondeur $V_T$ fluctue de 0,24 à 0,5.

2. Enveloppe pour saucisse ou saucisson à chair fraîche ou crue suivant la revendication 1, caractérisée en ce que la nappe de filage se compose d'un ou plusieurs polyamides appartenant au groupe PA6, PA6-6, PA6-10, PA11, PA12 et/ou de copolyamides issus de deux ou plusieurs des monomères correspondants.

3. Enveloppe pour saucisse ou saucisson à chair fraîche ou crue suivant la revendication 1 - 2, caractérisée en ce que la nappe présente une surface structurée du côté tourné vers la chair à saucisse et une surface lisse de l'autre côté.

4. Enveloppe pour saucisse ou saucisson à chair fraîche ou crue suivant l'une des revendications précédentes 1 - 3, caractérisée en ce que, en direction transversale, son diagramme de variations longueur-force selon la norme DIN 53 455

a) se situe dans la zone d'élasticité de Hooke jusqu'au moins 90% de la résistance à la rupture,
b) les valeurs d'augmentation calculées à partir de la zone de Hooke sont de

$$\frac{F_Y}{\Delta l_x} > 1 \text{ N/mm,}$$

c) l'allongement est inférieur à 90 %, où toutes les valeurs ont été mesurées sur des bandelettes d'une largeur de 15 ± 0,1 mm et d'une longueur de 50 mm et $F_y$ représente l'effort de traction en N et $\Delta l_x$ représente la variation de la longueur mesurée en mm, provoquée par l'effort $F_y$.

5. Enveloppe pour saucisse ou saucisson à chair fraîche ou crue suivant l'une des revendications 1 à 4, caractérisée en ce qu'elle présente une surface interne structurée par des domaines densifiés rectangulaires et par des interstices non densifiés situés entre ces domaines rectangulaires, où les côtés des rectangles s'étendent parallèlement ou perpendiculairement les uns par rapport aux autres et par rapport à l'axe longitudinal de l'enveloppe.

6. Enveloppe pour saucisse ou saucisson à chair fraîche ou crue suivant la revendication 5, caractérisée en ce que les longueurs des côtés des rectangles varient de 0,5 à 1,5 mm, les largeurs des interstices varient de 0,3 à 1 mm et l'épaisseur de paroi, mesurée aux interstices non densifiés, fluctue de 0,125 à 0,25 mm et de 0,06 à 0,125 mm dans la zone des rectangles densifiés.

7. Procédé de fabrication d'une enveloppe pour saucisse ou saucisson à chair fraîche ou crue suivant les revendications 1 à 6, dans lequel une nappe de filage sans orientation, exempte de liant et fabriquée de manière connue à partir d'au moins un polyamide, est densifiée sous pression et à température accrue, caractérisé en ce que la densification est partielle et permanente et la nappe partiellement densifiée et structurée est liée en direction longitudinale en une gaine.

8. Procédé selon la revendication 7, caractérisé en ce que l'on densifie partiellement la nappe de filage sans orientation en manière telle en ce que l'une de ses surfaces soit lisse et non structurée cependant que l'autre de ses surfaces soit structurée et que lors de la formation de la gaine la surface structurée vienne à se trouver à l'intérieur.

9. Procédé suivant l'une des revendications 7 et 8, caractérisé en ce que l'on met en oeuvre une nappe de filage sans orientation, isotrope, en polyamide 6, avec des poids surfaciques de 30 à 80 g/m et des épaisseurs de paroi de 0,125 à 0,250 mm.

10. Procédé suivant l'une des revendications 7 à 9, caractérisé en ce que l'on réalise le traitement de densification thermomécanique et partielle à des pressions allant jusqu'à 200 bars et à des températures allant jusqu'à 600° K.

11. Procédé suivant les revendications 7 à 10, caractérisé en ce que l'on procède à la densification partielle à l'aide d'une paire de cylindres, dont l'un des cylindres présente une surface chauffable, résistant à l'usure, de préférence structurée par des rainures longitudinales et transversales et dont l'autre cylindre, éventuellement refroidissable, possède une surface lisse, non collante.

12. Utilisation de l'enveloppe pour saucisse ou saucisson à chair fraîche ou crue suivant les revendications 1 à 6 en vue de l'emballage d'une chair à saucisse dont la maturation s'effectue à l'air, comme le salami, le cervelas mou, dur ou analogues.

# Fig.1

## Fig. 2

## Fig. 3

3

Fig.4

Fig.5

## Fig.6

## Fig.7

Hooke-
Bereich

$I_D$